# EUROPÄISCHE PATENTSCHRIFT

(11) **EP 1 569 158 B1**
(45) Veröffentlichungstag und Bekanntmachung des Hinweises auf die Patenterteilung: **28.06.2006**
(21) Anmeldenummer: 05002351.4
(22) Anmeldetag: 04.02.2005
(51) Int. Cl.: G06K 7/10

(54) **Verfahren und Vorrichtung zum optischen Abtasten von Objekten**
Method and device for optical scanning of an object
Méthode et appareil de balayage optique d'un objet

(30) Priorität: 27.02.2004 DE 102004009496
(43) Veröffentlichungstag der Anmeldung: 31.08.2005
(73) Patentinhaber: SICK AG, 79183 Waldkirch (DE)
(72) Erfinder: Reichenbach, Jürgen, 79312 Emmendingen (DE); Gehring, Roland, 79215 Elzach (DE); Schumacher, Daniel, 79331 Teningen (DE)
(74) Vertreter: Ludewigt, Christoph

(56) Entgegenhaltungen:
- EP-A- 0 444 958
- US-B1- 6 527 184

## Beschreibung

Die Erfindung betrifft ein Verfahren zum optischen Abtasten von Objekten, insbesondere Markierungen, gemäß dem Oberbegriff des Anspruchs 1 sowie eine Vorrichtung zum optischen Abtasten von Objekten, insbesondere Markierungen, gemäß dem Oberbegriff des Anspruchs 9.

Eine Vorrichtung dieser Art ist aus der EP 0 480 348 A1 bekannt. Hier werden die Lichtstrahlen von zwei Sendern, insbesondere Laserquellen, mittels eines halbdurchlässigen Spiegels in eine gemeinsame Strahlrichtung gelenkt und treffen auf einen rotierenden Polygonspiegel auf, der die Lichtstrahlen auf das abzutastende Objekt, z. B. einen Barcode, lenkt. Das vom Objekt reflektierte Licht wird weiter durch den Polygonspiegel in ein gemeinsames Empfängersystem gelenkt. Die zwei Sender besitzen unterschiedliche Fokusabstände, um Objekte in unterschiedlichen Entfernungen von der Vorrichtung abtasten zu können. Die Sender werden zuerst abwechselnd betrieben, um festzustellen, welcher Fokusabstand dem Abstand des abzutastenden Objektes entspricht. Danach wird nur noch dieser Sender betrieben und mit ihm das Objekt abgetastet. Die Verwendung von zwei Sendern mit unterschiedlichem Fokusabstand vergrößert so die Tiefenschärfe der Vorrichtung.

Aus der US 6,527,184 B1 ist weiter eine Vorrichtung bekannt, bei welcher zwei Paare von Sendern der in EP 0 480 348 A1 beschriebenen Art verwendet werden. Die in einer gemeinsamen Achse zusammenfallenden Lichtstrahlen der jeweiligen zwei Senderpaare verlaufen in unterschiedlichen Ebenen, die in Richtung der Drehachse des Polygonspiegels gegeneinander versetzt sind. Auf diese Weise soll die Parallaxe ausgeglichen werden, die bei unterschiedlichen Abständen auftreten kann.

Ferner beschreibt die EP 0 444 958 B1 eine Vorrichtung zum Abtasten von Barcodes, bei der die Lichtstrahlen aus zwei Sendern nach Ablenkung durch einen Polygonspiegel jeweils auf eine Gruppe benachbarter, verschieden geneigter Spiegel treffen, welche so ausgerichtet sind, dass die verschiedenen Lichtstrahlen in unterschiedlichen Winkeln auf den abzutastenden Barcode treffen. Auf diese Weise können die Barcodes omnidirektional abgetastet werden.

Der Erfindung liegt das Problem zu Grunde, ein Verfahren und eine einfache und flexible Vorrichtung der eingangs genannten Art zur Verfügung zu stellen, mit welcher Objekte ohne definierte Position relativ zur Vorrichtung zuverlässig optisch abgetastet werden können.

Dieses Problem wird erfindungsgemäß gelöst durch ein Verfahren mit den Merkmalen des Anspruchs 1 und eine Vorrichtung mit den Merkmalen des Anspruchs 9. Vorteilhafte Ausführungen und Weiterbildungen der Erfindung sind in den Unteransprüchen angeführt.

Der wesentliche Gedanke der Erfindung besteht darin, ein Objekt mit einem rotierenden Polygonspiegel und mindestens zwei Lichtstrahlen voneinander getrennter Sender-Empfänger-Kanäle abzutasten, und dabei die Sender so anzuordnen, dass die von diesen ausgesandten Lichtstrahlen das Objekt jeweils in Abtastebenen überstreichen, welche unter verschiedenen Winkeln auf das Objekt treffen. Erhält man bei ungünstiger Position des abzutastenden Objektes relativ zu einer Abtastebene für den zugehörigen Kanal ein verrauschtes bzw. unbrauchbares Signal, insbesondere durch überlagerte Reflexionen beispielsweise bei senkrechtem Auftreffen des Lichtstrahls auf eine Beschichtung eines Barcodes, so wird das Signal des anderen Kanals verwertet.

Die erfindungsgemäße Vorrichtung weist mindestens zwei unabhängige Sender-Empfänger-Kanäle mit einem gemeinsamen, beiden Kanälen zugeordneten, rotierenden Polygonspiegel auf, der die Lichtstrahlen aus den Sendern auf das abzutastende Objekt lenkt. Die Sender sind um unterschiedliche Winkel gegenüber der zur Rotationsachse des Polygonspiegels senkrechten Ebene geneigt angeordnet, so dass die Lichtstrahlen der verschiedenen Sender unter unterschiedlichen Winkeln auf die Spiegelflächen des Polygonspiegels treffen, von wo aus sie auf das Objekt gelenkt werden, welches sie in unterschiedlich geneigten Abtastebenen überstreichen. Vom Objekt werden die Lichtstrahlen reflektiert und gelangen in die jeweils zugehörigen Empfänger. Mit den verschiedenen Sender-Empfänger-Kanälen erfolgt auf diese Weise eine getrennte Abtastung des Objekts, wobei die von den verschiedenen Lichtstrahlen gebildeten Abtastebenen unterschiedlich geneigt auf das Objekt treffen, ohne dass hierfür zusätzliche Spiegelanordnungen zur Erzielung dieser unterschiedlichen Neigungswinkel notwendig sind.

Liegt ein Sender oberhalb, ein anderer unterhalb der zur Rotationsachse des Polygonspiegels senkrechten Ebene und weisen beide Sender einen betragsmäßig gleichen Winkelabstand zu dieser Ebene auf, so sind diese positiven und negativen Winkel im Sinne der Erfindung als verschieden zu betrachten.

Unter Licht ist jegliche elektromagnetische Strahlung zu verstehen, insbesondere Strahlung im Wellenlängenbereich von Ultraviolett bis Infrarot. Die Bauelemente der Vorrichtung wie Spiegel sind dabei an die verwendeten Wellenlängen bzw. Wellenlängenbereiche anzupassen.

Die getrennten Sender-Empfänger-Kanäle erlauben eine flexible Anpassung des Verfahrens bzw. der Vorrichtung an die jeweiligen Anforderungen.

Bei einer vorteilhaften Ausführung der Erfindung sind die mindestens zwei Sender so positioniert, dass wenigstens ein Sender oberhalb einer zur Rotationsachse des Polygonspiegels senkrechten und diesen schneidenden Ebene liegt und wenigstens einer unterhalb dieser Ebene. Die Sender sind jeweils so ausgerichtet, dass die von ihnen ausgesandten Strahlen möglichst nahe der beschriebenen Ebene auf den Polygonspiegel treffen. Auf diese Weise können der Polygonspiegel und die gesamte Vorrichtung in flacher Bauform ausgeführt werden.

In einer bevorzugten Ausführungsform sind die Sender darüber hinaus so angeordnet, dass die von mindestens einem Senderpaar, dessen einer Sender oberhalb, der andere unterhalb der zur Rotationsachse des Polygonspiegels senkrechten Ebene liegt, ausgesandten Strahlen unter betragsmäßig gleichem Winkel zur beschriebenen Ebene auf den Polygonspiegel treffen. Sind mehr als zwei Sender-Empfänger-Kanäle und insbesondere mehr als ein Senderpaar vorgesehen, so weist der beschriebene betragsmäßig gleiche Winkel vorzugsweise für jedes Senderpaar einen anderen Wert auf, so dass zusätzliche Abtastwinkel zur Abtastung des Objekts zur Verfügung stehen.

In einer weiteren Ausgestaltung der Erfindung sind mindestens zwei Sender derart angeordnet, dass deren Lichtstrahlen in Drehrichtung des Polygonspiegels im Winkel gegeneinander versetzt auf den Polygonspiegel treffen, so dass die einzelnen Sender-Empfänger-Kanäle das Objekt phasenversetzt abtasten. Erhält man z.B. bei Einsatz von zwei Sendern für beide Sender-Empfänger-Kanäle unverrauschte, brauchbare Signale, so ergibt sich bei identischem Aufbau der Sender-Empfänger-Kanäle gegenüber einer nicht versetzten Senderanordnung eine Verdopplung der Abtastfrequenz. In einer bevorzugten Ausführungsform sind die Sender darüber hinaus im betragsmäßig gleichen Winkelabstand zu einer die Rotationsachse des Polygonspiegels einschließenden Ebene angeordnet, die durch äußere Gegebenheiten, wie z. B. die Austrittsöffnung des Gehäuses, ausgezeichnet ist, wobei die Hälfte der Gesamtzahl der Sender links, die andere Hälfte rechts dieser Ebene liegt. Werden statt zwei mindestens vier Sender eingesetzt, die paarweise in Drehrichtung des Polygonspiegels gegeneinander versetzt und in ihren jeweiligen die Rotationsachse des Polygonspiegels einschließenden Ebenen gegenüber der zur Rotationsachse des Polygonspiegels senkrechten Ebene unterschiedlich geneigt angeordnet sind, so erhält man eine durchgehende Verdoppelung der Abtastfrequenz, da im Falle eines unbrauchbaren Signals eines Kanals das Signal des entsprechenden zweiten Senders zur Verfügung steht, dessen Lichtstrahlen unter einem anderen Winkel auf das Objekt treffen.

Weiterhin sind in einer vorteilhaften Ausführungsform mehr als zwei Sender-Empfänger-Kanäle, z. B. vier, so angeordnet, dass sich jeweils ein Paar der Sender in einer die Rotationsachse des Polygonspiegels einschließenden Ebene befindet. Die Ebenen der verschiedenen Senderpaare sind in Rotationsrichtung des Polygonspiegels gegeneinander gedreht angeordnet. Des Weiteren sind die Sender eines jeweiligen Senderpaares in einer dieser Ebenen unter unterschiedlichen Winkeln zu der zur Rotationsachse des Polygonspiegels senkrechten Ebene angeordnet. In der Projektion auf das abzutastende Objekt ergeben sich auf diese Weise gekreuzte Lichtstrahlen, was stets eine omnidirektionale Abtastung des Objekts ermöglicht. Bei Verwendung von nur zwei entsprechend angeordneten Sendern hingegen ist eine omnidirektionale Abtastung nur dann möglich, wenn beide Sender verwertbare Signale liefern und nicht eines davon z.B. durch überlagerte Reflexionen verrauscht ist. Werden mindestens vier Sender in der beschriebenen Weise eingesetzt, so sieht eine besonders bevorzugte Ausführungsform der Erfindung vor, dass die beiden Sender in einer die Rotationsachse des Polygonspiegels einschließenden Ebene symmetrisch zur Ebene senkrecht zur Rotationsachse des Polygonspiegels angeordnet sind und auch das Senderpaar in einer in Drehrichtung des Polygonspiegelspiegels versetzten Ebene auf diese Weise angeordnet ist. In Projektion auf das abzutastende Objekt ergibt sich sodann ein X-förmiges Abtastmuster, ein so genanntes X-Scanmuster.

In einer Ausgestaltung der Erfindung wird das Licht der Sender auf den zugehörigen Empfänger fokussiert. Dabei sind die jeweiligen Empfänger an derselben Stelle wie die jeweils zugehörigen Sender angeordnet und mit einem Loch versehen, in welchem sich der Sender befindet. Alternativ erfolgt die Trennung der reflektierten Lichtstrahlen durch einen jeweils im Strahlengang zwischen Sender und Polygonspiegel angeordneten, schräggestellten, halbdurchlässigen Spiegel, welcher jeweils den reflektierten Lichtstrahl auf den zugehörigen Empfänger lenkt. Die Fokussierung der einzelnen Sender-Empfänger-Kanäle erfolgt manuell oder in einer bevorzugten Ausführungsform zumindest teilweise durch Autokollimation.

Eine weitere Ausführungsform sieht unterschiedliche Fokussierungen der mindestens zwei getrennten Sender-Empfänger-Kanäle vor, welche für die Unterscheidung der reflektierten Signale aus verschiedenen Kanäle herangezogen wird.

Bei einer anderen Ausgestaltung der Erfindung ist zur mindestens teilweisen Detektion des vom Objekt reflektierten Lichts mindestens ein Rundumempfänger vorgesehen. Die Trennung der Signale der verschiedenen Kanäle erfolgt dadurch, dass die einzelnen Sender-Empfänger-Kanäle verschiedene Modulationsfrequenzen und/oder unterschiedliche Wellenlängen und/oder verschiedene Signalkodierungen bzw. -konditionierungen aufweisen und die Empfänger jeweils daran angepasst sind bzw. die wenigstens zwei Sender-Empfänger-Kanäle mit verschiedenen Code-Erkennungsverfahren arbeiten. Darüber hinaus ist die Verwendung von Sender-Empfänger-Kanälen mit unterschiedlichen Wellenlängen auch vorteilhaft für das Abtasten von verschiedenen Objekten, die bei unterschiedlichen Wellenlängen ihr Kontrastmaximum aufweisen. Eine zuverlässige Abtastung ist so ohne vorherige Anpassung der Vorrichtung an die geänderten Objekteigenschaften möglich.

Vorzugsweise als Lichtquellen für die Sender verwendete Laserdioden weisen häufig eine unrunde, insbesondere rechteckige abstrahlende Fläche auf. Dadurch ergibt sich bei der Fokussierung ein Astigmatismus, d.h. ein unterschiedlicher Fokusabstand in der Ebene der längeren und der Ebene der kürzeren Achse der Laserdiode. Eine vorteilhafte Ausführungsform der Erfindung macht sich dies zunutze, indem bei Verwendung von zwei Sender-Empfänger-Kanälen die Laserdioden um ca. 90° gegeneinander gedreht angeordnet sind. Auf diese Weise wird der Astigmatismus ausgenützt, um den Tiefenschärfenbereich der Vorrichtung zu vergrößern oder elliptische Fokusflecken zu erzeugen. Diese elliptischen Fokusformen sind in Anwendungen mit definierter Ausrichtung länglicher, abzutastender Objekte gegenüber der Vorrichtung von Vorteil. In diesen Fällen wird der elliptische Lichtfleck mit seiner längeren Achse parallel zur länglichen Ausdehnung des Objekts, z.B. den Strichen eines Barcodes, ausgerichtet und so ein stärkerer Kontrast der Abtastung erzielt. Alternativ oder ergänzend hierzu kann in einer weiteren Ausgestaltungsform derselbe Effekt auch durch die Verwendung von formgebenden Blenden vor den Sendern erzielt werden.

Erfindungsgemäß werden verrauschte Abtastergebnisse auf Grund von Reflexionen, die von dem abzutastenden Objekt überlagerten Schichten stammen, wie z.B. Filme auf Barcodes, vermieden durch die Verwendung von mindestens zwei Lichtstrahlen, die unter verschiedenen Abtastwinkeln auf das Objekt auftreffen. Zusätzlich kann in einer Ausgestaltung der Erfindung zur Verringerung dieses Problems auch polarisiertes Licht eingesetzt werden, so dass zwischen gerichteter Reflexion und diffusem Streulicht unterschieden werden kann. Bei Verwendung von lediglich zwei getrennten Sender-Empfänger-Kanälen wird in einer bevorzugten Ausführungsform zur Trennung der Signale darüber hinaus komplementär polarisiertes Licht verwendet. Dabei wird die Lichtquelle des einen Sender-Empfänger-Kanals mit einem Polarisator versehen, der zu dem in der Lichtquelle des anderen Kanals komplementär ist (links- und rechtszirkular polarisiertes Licht oder senkrecht zueinander linear polarisiertes Licht). Im Empfänger jedes Kanals befindet sich ein Analysator, der jeweils nur Licht der Polarisationsart des zugehörigen Empfängers passieren lässt.

In einer bevorzugten Ausführungsform der Erfindung werden die einzelnen Sende-Empfänger-Kanäle jeweils auf einen anderen Abstand von der Vorrichtung fokussiert und/oder teilweise durch Autokollimation fokussiert. Für alle Kanäle gemeinsam ergibt sich somit eine größere Tiefenschärfe der Vorrichtung.

Weiterhin sind in einer vorteilhaften Ausführungsvariante die Sender-Empfänger-Kanäle gegeneinander versetzt angeordnet, was eine räumliche Auswertung der Abtastsignale ermöglicht. Die Sender haben definierte räumliche Abstände voneinander, so dass aus den reflektierten Lichtanteilen der verschiedenen Kanäle Informationen über die Lage des Objekts im Raum und dessen Oberflächenform gewonnen werden können.

Die Erfindung ist nicht auf einen starren Betriebsmodus fixiert, sondern kann in einer besonders bevorzugten Ausgestaltung durch elektronische oder Softwarebasierte Steuerung dynamisch betrieben werden, so dass vorteilhafte Kombinationen oder Abfolgen von Ausführungen realisiert werden. Beispielsweise kann das Ergebnis einer ersten Abtastung mit mindestens einem Sender-Empfänger-Kanal dazu verwendet werden, die Parameter für nachfolgende Abtastungen mit mindestens einem anderen Sender-Empfänger-Kanal zu optimieren oder auch die Signalverarbeitung im Empfänger den Gegebenheiten anzupassen. Unter anderem ist auf diese Weise eine elektromechanische Fokusnachstellung basierend auf den zuvor durchgeführten Abtastungen möglich. Weiter können alternierende Abtastungen des Objekts durch mindestens zwei Sender-Empfänger-Kanäle realisiert werden.

Im Folgenden wird die Erfindung an Hand von in den beigefügten Zeichnungen dargestellten Ausführungsbeispielen erläutert. Dabei zeigen
- Figur 1:: eine schematische Darstellung des Grundprinzips der Erfindung,
- Figur 2:: eine Seitenansicht der Erfindung,
- Figur 3:: eine schematische Darstellung in Drehrichtung des rotierenden Polygonspiegels versetzter Sender und
- Figur 4:: ein X-Scanmuster.

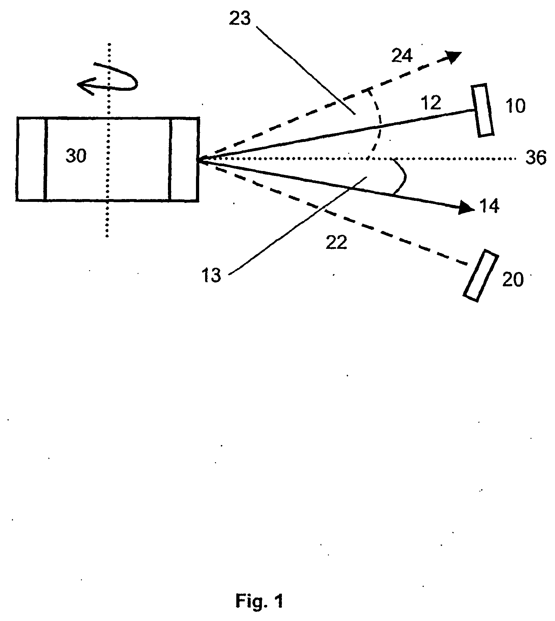

Figur 1 zeigt schematisch das Grundprinzip der Erfindung mit zwei getrennten Sender-Empfänger Kanälen. Zwei Sender 10 und 20, die prinzipiell in an sich bekannter Weise aus einer Lichtquelle, z.B. einem Laser, und einem optischen Fokussierungssystem bestehen, sind in unterschiedlichen Winkeln zu einer Ebene angeordnet, die senkrecht zur Rotationsachse eines Polygonspiegels 30 liegt. Die Lichtstrahlen 12 und 22 dieser Sender 10 und 20 treffen auf den rotierenden Polygonspiegel 30. Die an dessen Spiegelfläche reflektierten Strahlen 14 und 24 treten unter verschiedenen Neigungswinkeln gegenüber der Ebene senkrecht zur Rotationsachse des Polygonspiegels 30, den so genannten Skewwinkeln 13 und 23, aus der Vorrichtung aus. Die austretenden Strahlen 14 und 24 überstreichen bei Drehung des Polygonspiegels 30 ein abzutastendes Objekt und werden von diesem reflektiert und in nicht dargestellte Empfängersysteme gelenkt, welche in an sich bekannter Weise ausgebildet sind und insbesondere einen opto-elektronischen Wandler sowie eine nachgeschaltete Signalbearbeitung aufweisen.

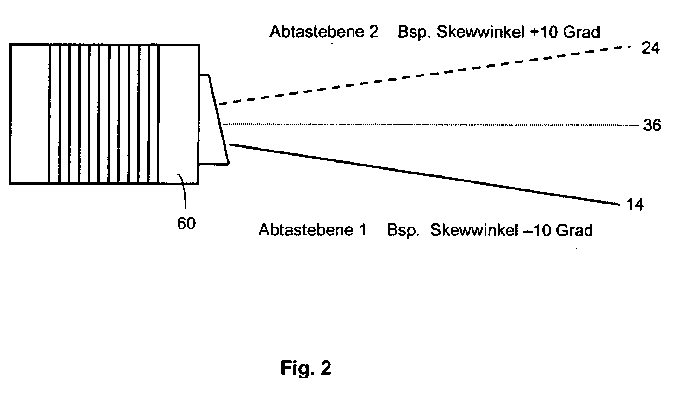

Figur 2 zeigt eine Seitenansicht eines erfindungsgemäßen Scanners 60. Im Scanner 60 sind die zwei getrennten Sender-Empfänger Systeme so angeordnet, dass die Abtaststrahlen 14 und 24 den Scanner 60 unter verschiedenen Skewwinkeln verlassen, beispielsweise um -10° und +10° gegenüber der zur Rotationsachse des Polygonspiegels 30 senkrechten Ebene 36 geneigt. Auf Grund der Rotation des Polygonspiegels 30 im Scanner 60 überstreichen die Strahlen 14 und 24 fächerförmig in den Abtastebenen 1 und 2 das Objekt und tasten dieses unter verschiedenen Einfallswinkeln gegenüber der Oberflächennormalen des Objekts ab. Es ist offensichtlich, dass hierzu die Skewwinkel auch betragsmäßig verschieden sein können.

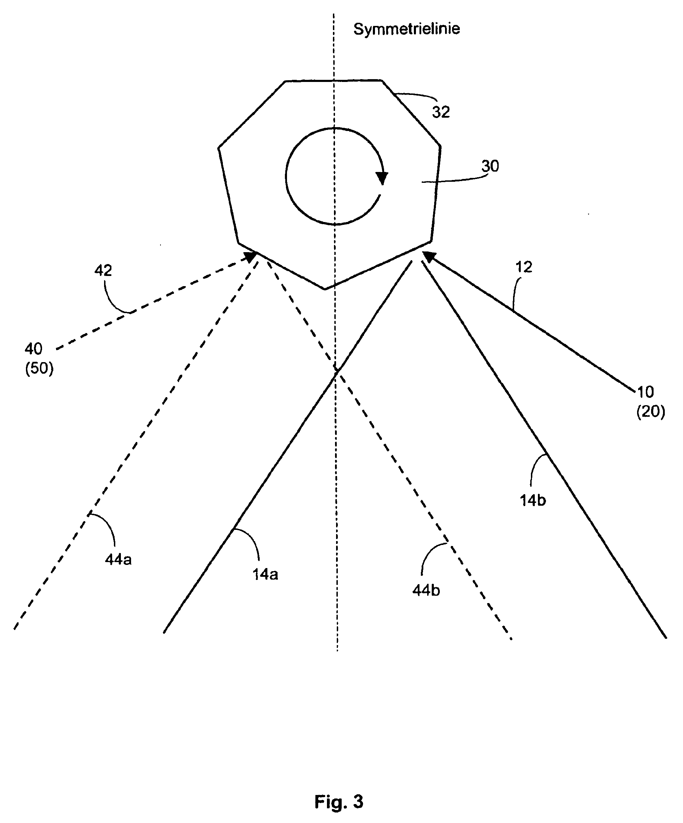

In Figur 3 ist schematisch eine Ausführung dargestellt, bei der zwei Sender-Paare 10, 20 und 40, 50 in Drehrichtung des Polygonspiegels 30 zueinander versetzt angeordnet sind, wobei die Sender 10 und 20 bzw. 40 und 50 jeweils in einer gemeinsamen, die Rotationsachse des Polygonspiegels 30 einschließenden Ebene angeordnet sind. In der Draufsicht der Figur 3 ist daher jeweils nur der obere Sender 10 bzw. 40 des jeweiligen Paares zu sehen. Der Sender 10 sendet einen Lichtstrahl 12 auf den rotierenden Polygonspiegel 30. An den Spiegelflächen 32 wird dieser reflektiert und überstreicht mit Drehung des Polygonspiegels 30 fächerförmig das abzutastende Objekt, wird von dem Objekt reflektiert und in das nicht dargestellte Empfängersystem gelenkt. Für jede der Spiegelflächen 32 überstreicht der Lichtstrahl einen fächerförmigen Bereich der durch die maximale und minimale Ablenkungsrichtung 14a und 14b gegeben ist. In analoger Weise wird der aus dem Sender 40 stammende Lichtstrahl vom Polygonspiegel 30 abgelenkt und überstreicht einen fächerförmigen Abtastbereich, der wiederum durch die Lichtstrahlrichtungen minimaler und maximaler Ablenkung 44a und 44b gegeben ist. Entsprechend überstreichen die Lichtstrahlen der jeweils zweiten Sender 20 bzw. 50 der zwei Sender-Paare das Objekt synchron unter unterschiedlichen Skewwinkeln. Mit diesem Aufbau wird das Objekt phasenversetzt von den Lichtstrahlen 14 und 44 und den entsprechenden Strahlen der Sender 20 und 50 abgetastet und man erhält gegenüber einem System mit nur einem Paar von Sender-Empfänger-Kanälen eine Verdopplung der Abtastfrequenz. Diese wird durch überlagerte Reflexionen nicht gestört, da gegebenenfalls auf das Signal des zweiten Senders des jeweiligen Senderpaares zurückgegriffen wird, der unter einem anderen Skewwinkel angeordnet ist und ein verwertbares Signal liefert.

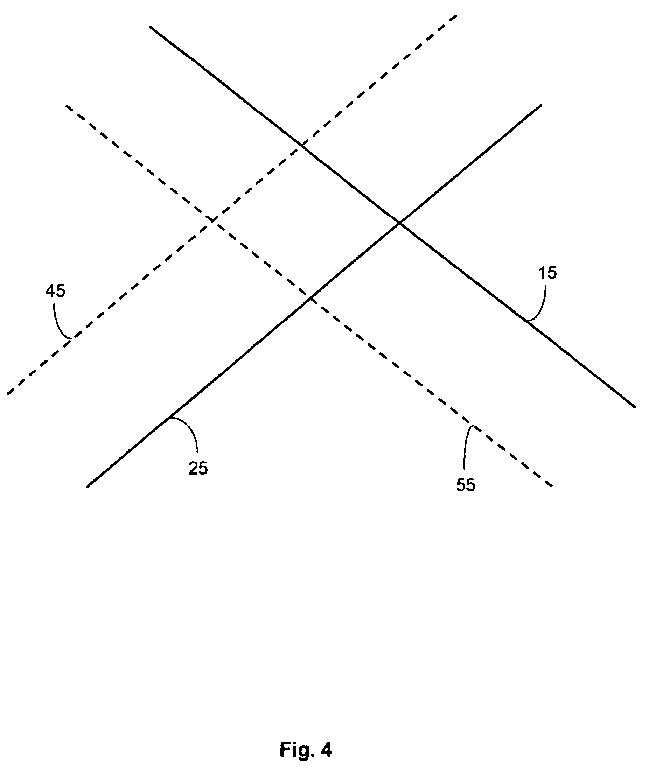

Sind alle Sender in Figur 3 betragsmäßig unter demselben Skewwinkel angeordnet und weisen die Skewwinkel der Sender 20 und 50 jeweils entgegengesetzte Vorzeichen auf wie die zugehörigen Sender 10 und 40, so ergibt sich in Projektion auf das abzutastende Objekt das in Figur 4 dargestellte, gekreuzte Abtastmuster, auch als X-Scanmuster bezeichnet. Hierin bezeichnen 15, 25, 45 und 55 jeweils die Projektion der das Objekt überstreichenden Lichtstrahlen aus den jeweiligen Sendern 10, 20, 40 und 50 auf das abzutastende Objekt. Das X-Scanmuster ermöglicht eine zuverlässige omnidirektionale Abtastung von Objekten, da für verschiedene Skewwinkel kreuzende Abtastlinien vorliegen. Im Allgemeinen können selbstverständlich auch mit geeigneten verschiedenen Skewwinkeln der einzelnen Sender gekreuzte Scanmuster realisiert werden.

Die Trennung der Empfangssysteme der verschiedenen Sender 10, 20 etc. kann auf verschiedene Weise erfolgen. Neben einer mechanisch-konstruktiven Trennung durch unterschiedliche Fokussierung der verschiedenen Sender-Empfänger-Kanäle, bei der die Fokussierung mittels an sich bekannten Autokollimationssystemen erfolgen kann, ist es möglich, die Sender unterschiedlich zu modulieren und durch entsprechend angepasste Empfangssysteme eine Signaltrennung vorzunehmen. Weiter können die Sender mit Lichtquellen jeweils unterschiedlicher Wellenlänge, insbesondere verschiedene Laserwellenlängen, versehen, und die zugehörigen Empfänger darauf abgestimmt werden. Darüber hinaus sind elektronische Signalcodierungsverfahren in Kombination mit entsprechender Empfängeranpassung möglich. Bei Verwendung von nur zwei Sendern ist auch eine Kanaltrennung dadurch möglich, dass die beiden Sender zueinander senkrecht polarisiertes Licht aussenden und die Empfänger mit entsprechenden Polarisationsfiltern ausgestattet werden.

Die Erfindung ist selbstverständlich nicht auf die Verwendung von zwei oder vier Sender-Empfänger-Kanälen beschränkt. Die in den Zeichnungen dargestellten Senderanordnungen können ohne weiteres auf eine größere Anzahl von Sender übertragen werden, um so beispielsweise eine größere Zahl an verschiedenen Skewwinkeln abzudecken oder eine größere Tiefenschärfe zu gewährleisten. Eine Laserkonfiguration kann in einer Vorrichtung auch entlang der Rotationsachse eines Polygonspiegels mehrmals wiederholt angeordnet werden, um so simultan an verschiedenen Orten mehrere Objekte gleichzeitig abzutasten.

## Patentansprüche

1. Verfahren zum optischen Abtasten von Markierungen, mittels Lichtstrahlen mindestens zweier getrennter Sender-Empfänger-Kanäle und einem rotierenden Polygonspiegel (30), **dadurch gekennzeichnet, dass** die von den Sendern (10; 20) der verschiedenen Sender-Empfänger-Kanäle ausgesandten Lichtstrahlen (12; 24) von dem Polygonspiegel (30) so reflektiert werden, dass sie um verschiedene Winkel gegenüber einer zur Rotationsachse des Polygonspiegels (30) senkrechten Ebene (36) geneigt werden.

2. Verfahren nach Anspruch 1, **gekennzeichnet dadurch, dass** die mindestens zwei Sender-Empfänger-Kanäle mit verschiedenen Fokussierungen und/oder mit Licht verschiedener Polarisation betrieben werden.

3. Verfahren nach einem der vorhergehenden Ansprüche, **gekennzeichnet dadurch, dass** in den wenigstens zwei Sender-Empfänger-Kanälen die Sender (10; 20) mit unterschiedlichen Modulationsfrequenzen betrieben werden und/oder Licht unterschiedlicher Wellenlängen eingesetzt wird und die Empfänger jeweils darauf abgestimmt sind.

4. Verfahren nach einem der vorhergehenden Ansprüche, **gekennzeichnet dadurch, dass** wenigstens zwei Sender-Empfänger-Kanäle mit unterschiedlichen elektronischen Signalcodierungs- oder konditionierungsverfahren arbeiten.

5. Verfahren nach einem der vorhergehenden Ansprüche, **gekennzeichnet dadurch, dass** die Signale von mindestens einem der Empfängersysteme zur Nachführung der Parameter mindestens eines anderen Sender-Empfänger-Kanals verwendet werden.

6. Verfahren nach einem der vorhergehenden Ansprüche, **gekennzeichnet dadurch, dass** wenigstens zwei Sender-Empfänger-Kanäle das Objekt alternierend abtasten.

7. Vorrichtung zum optischen Abtasten von Markierungen, mit mindestens zwei getrennten Sender-Empfänger-Kanälen und einem rotierenden Polygonspiegel (30), der die von den Sendern (10; 20) emittierten Lichtstrahlen auf das abzutastende Objekt lenkt, **dadurch gekennzeichnet, dass** die Strahlrichtungen der mindestens zwei Sender (10; 20) um verschiedene Winkel gegenüber einer zur Rotationsachse des Polygonspiegels (30) senkrechten Ebene (36) geneigt sind.

8. Vorrichtung nach Anspruch 7, **dadurch gekennzeichnet, dass** die Strahlrichtungen der mindestens zwei Sender (10; 20) in Drehrichtung des Polygonspiegels (30) gegeneinander versetzt sind, vorzugsweise im betragsmäßig gleichen Winkelabstand zu einer ausgezeichneten, die Rotationsachse des Polygonspiegels (30) einschließenden Ebene angeordnet sind, wobei einer der Sender links, der andere rechts der Ebene liegt.

9. Vorrichtung nach einem der Ansprüche 7 oder 8, **dadurch gekennzeichnet, dass** wenigstens einer der mindestens zwei Sender (10) oberhalb, und wenigstens einer der Sender (20) unterhalb einer zur Rotationsachse des Polygonspiegels (30) senkrechten Ebene (36) angeordnet ist, vorzugsweise die Strahlrichtungen (12; 22) der Sender (10; 20) paarweise in betragsmäßig gleichem Winkelabstand von der zur Rotationsachse des Polygonspiegels (30) senkrechten Ebene (36) angeordnet sind.

10. Vorrichtung nach einem der Ansprüche 7 bis 9, **dadurch gekennzeichnet, dass** die Empfänger jeweils an derselben Stelle wie die zugehörigen Sender (10; 20) angeordnet sind.

11. Vorrichtung nach einem der Ansprüche 7 bis 10, **dadurch gekennzeichnet, dass** der Polygonspiegel (30) eine ungerade Anzahl an Seitenflächen (32) aufweist

12. Vorrichtung nach einem der Ansprüche 7 bis 11, **dadurch gekennzeichnet, dass** mindestens einer der Sender-Empfänger-Kanäle durch Autokollimation fokussiert realisiert ist.

13. Vorrichtung nach einem der Ansprüche 7 bis 12, **dadurch gekennzeichnet, dass** mindestens einer der Empfänger als Rundumempfänger ausgeführt ist.

14. Vorrichtung nach einem der Ansprüche 7 bis 13, **dadurch gekennzeichnet, dass** wenigstens zwei Sender-Empfänger-Kanäle unterschiedlichen Fokusabstand aufweisen und/oder mit unterschiedlichen Blenden für die Form des Fokusflecks versehen sind und/oder unterschiedliche Polarisationen des Lichts aufweisen und/oder unterschiedliche Modulationsfrequenzen der Sender (10; 20) und jeweils darauf abgestimmte Empfänger aufweisen.

15. Vorrichtung nach einem der Ansprüche 7 bis 14, **dadurch gekennzeichnet, dass** wenigstens zwei Sender (10; 20) Licht unterschiedlicher Wellenlängen emittieren, auf welches die Empfänger jeweils abgestimmt sind und/oder jeweils einen Astigmatismus aufweisen und im Bezug auf die Abstrahlcharakteristik der Sender gegeneinander verdreht angeordnet sind.

16. Vorrichtung nach einem der Ansprüche 7 bis 15, **dadurch gekennzeichnet, dass** wenigstens zwei Sender-Empfänger-Kanäle mit unterschiedlichen elektronischen Signalcodierungs- oder konditionierungsverfahren arbeiten und/oder mit unterschiedlichen Code-Erkennungsverfahren arbeiten.

## Claims

1. Method for optically scanning markings by means of light beams of at least two separate transmitter-receiver channels and a rotating polygon mirror (30), **characterized in that** the light beams (12; 24) emitted by the transmitters (10; 20) of the various transmitter-receiver channels are reflected by the polygon mirror (30) so that they are inclined at different angles relative to a plane (36) perpendicular to the rotation axis of the polygon mirror (30).

2. Method according to Claim 1, **characterized in that** the at least two transmitter-receiver channels are operated with different focusings and/or with light of different polarization.

3. Method according to one of the preceding claims, **characterized in that** the transmitters (10; 20) in the at least two transmitter-receiver channels are operated with different modulation frequencies, and/or light of different wavelengths is used and the receivers are respectively tuned thereto.

4. Method according to one of the preceding claims, **characterized in that** at least two transmitter-receiver channels work with different electronic signal encoding or conditioning methods.

5. Method according to one of the preceding claims, **characterized in that** the signals of at least one of the receiver systems are used in order to control the parameters of at least one other transmitter-receiver channel.

6. Method according to one of the preceding claims, **characterized in that** at least two transmitter-receiver channels scan the object alternately.

7. Device for optically scanning markings having at least two separate transmitter-receiver channels and a rotating polygon mirror (30), which guides the light beams emitted by the transmitters (10; 20) onto the object to be scanned, **characterized in that** the beam directions of the at least two transmitters (10; 20) are inclined at different angles relative to a plane (36) perpendicular to the rotation axis of the polygon mirror (30).

8. Device according to Claim 7, **characterized in that** the beam directions of the at least two transmitters (10; 20) are mutually offset in the rotation direction of the polygon mirror (30), and are preferably arranged at an angular separation of equal magnitude from a specific plane which includes the rotation axis of the polygon mirror (30), one transmitter lying on the left and the other on the right of the plane.

9. Device according to one of Claims 7 and 8, **characterized in that** at least one of the at least two transmitters (10) is arranged above and at least one of the transmitters (20) is arranged below a plane (36) perpendicular to the rotation axis of the polygon mirror (30), and the beam directions (12; 22) of the transmitters (10; 20) are preferably arranged pairwise at an angular separation of equal magnitude from the plane (36) perpendicular to the rotation axis of the polygon mirror (30).

10. Device according to one of Claims 7 to 9, **characterized in that** the receivers are respectively arranged at the same position as the associated transmitters (10; 20).

11. Device according to one of Claims 7 to 10, **characterized in that** the polygon mirror (30) comprises an odd number of side faces (32).

12. Device according to one of Claims 7 to 11, **characterized in that** at least one of the transmitter-receiver channels is produced so that it is focused by autocollimation.

13. Device according to one of Claims 7 to 12, **characterized in that** at least one of the receivers is designed as an omnidirectional receiver.

14. Device according to one of Claims 7 to 13, **characterized in that** at least two transmitter-receiver channels have a different focal length and/or are provided with different diaphragms for the shape of the focal spot and/or different polarizations of the light and/or different modulation frequencies of the transmitters (10; 20), and receivers respectively tuned thereto.

15. Device according to one of Claims 7 to 14, **characterized in that** at least two transmitters (10; 20) emit light of different wavelengths, to which the receivers are respectively tuned, and/or respectively have an astigmatism and are arranged mutually rotated in relation to the emission characteristic of the transmitters.

16. Device according to one of Claims 7 to 15, **characterized in that** at least two transmitter-receiver channels work with different electronic signal encoding or conditioning methods and/or work with different code recognition methods.

## Revendications

1. Procédé de lecture optique de marques au moyen des rayons lumineux d'au moins deux canaux d'émission-réception séparés et d'un miroir polygonal rotatif (30), **caractérisé en ce que** les rayons lumineux (12 ; 24) émis par les émetteurs (10 ; 20) des différents canaux d'émission-réception sont réfléchis par le miroir polygonal (30) de telle sorte qu'ils sont inclinés sous différents angles par rapport à un plan perpendiculaire (36) à l'axe de rotation du miroir polygonal (30).

2. Procédé selon la revendication 1, **caractérisé en ce que** les deux ou plus de deux canaux d'émission-réception fonctionnent avec différentes focalisations et/ou avec de la lumière dont la polarisation diffère.

3. Procédé selon l'une des revendications précédentes, **caractérisé en ce que**, dans les deux ou plus de deux canaux d'émission-réception, les émetteurs (10 ; 20) fonctionnent avec des fréquences de modulation différentes et/ou **en ce que** l'on utilise de la lumière ayant des longueurs d'onde différentes et **en ce que** l'on règle chaque fois les récepteurs en fonction de cela.

4. Procédé selon l'une des revendications précédentes, **caractérisé en ce qu'**au moins deux canaux d'émission-réception fonctionnent avec des procédés électroniques de codage ou de mise en forme de signal différents.

5. Procédé selon l'une des revendications précédentes, **caractérisé en ce que** les signaux d'au moins un des systèmes récepteurs sont utilisés pour asservir les paramètres d'au moins un autre canal d'émission-réception.

6. Procédé selon l'une des revendications précédentes, **caractérisé en ce qu'**au moins deux canaux d'émission-réception explorent alternativement l'objet.

7. Dispositif de lecture optique de marques, comportant au moins deux canaux d'émission-réception séparés et un miroir polygonal rotatif (30) qui dirige les rayons lumineux émis par les émetteurs (10 ; 20) sur l'objet à explorer, **caractérisé en ce que** les directions de rayonnement des deux ou plus de deux émetteurs (10 ; 20) sont inclinées sous différents angles par rapport à un plan perpendiculaire (36) à l'axe de rotation du miroir polygonal (30).

8. Dispositif selon la revendication 7, **caractérisé en ce que** les directions de rayonnement des deux émetteurs au moins (10 ; 20) sont décalées l'une par rapport à l'autre dans la direction de rotation du miroir polygonal (30), sont de préférence disposées en ayant un écart angulaire identique en valeur absolue par rapport à un plan identifié englobant l'axe de rotation du miroir polygonal (30), l'un des émetteurs se trouvant à gauche et l'autre à droite du plan.

9. Dispositif selon l'une des revendications 7 ou 8, **caractérisé en ce qu'**au moins un des deux ou plus de deux émetteurs (10) est disposé au-dessus d'un plan perpendiculaire (36) à l'axe de rotation du miroir polygonal (30) et au moins un des émetteurs (20) est disposé au-dessous dudit plan, et **en ce que**, de préférence, les directions de rayonnement (12 ; 22) des émetteurs (10 ; 20) sont disposées par paires en ayant un écart angulaire identique en valeur absolue par rapport au plan perpendiculaire (36) à l'axe de rotation du miroir polygonal (30).

10. Dispositif selon l'une des revendications 7 à 9, **caractérisé en ce que** les récepteurs sont chaque fois disposés au même endroit que les émetteurs associés (10 ; 20).

11. Dispositif selon l'une des revendications 7 à 10, **caractérisé en ce que** le miroir polygonal (30) comporte un nombre impair de faces latérales (32).

12. Dispositif selon l'une des revendications 7 à 11, **caractérisé en ce qu'**au moins un des canaux d'émission-réception est réalisé en étant focalisé par autocollimation.

13. Dispositif selon l'une des revendications 7 à 12, **caractérisé en ce qu'**au moins un des récepteurs est réalisé sous forme de récepteur panoramique.

14. Dispositif selon l'une des revendications 7 à 13, **caractérisé en ce qu'**au moins deux canaux d'émission-réception ont une distance focale différente et/ou sont munis de diaphragmes différents pour la forme de la zone focale et/ou présentent des polarisations de la lumière différentes et/ou ont des fréquences de modulation des émetteurs (10 ; 20) différentes ainsi que des récepteurs chaque fois réglés en fonction de cela.

15. Dispositif selon l'une des revendications 7 à 14, **caractérisé en ce qu'**au moins deux émetteurs (10 ; 20) émettent de la lumière de longueurs d'onde différentes, lumière en fonction de laquelle les récepteurs sont chaque fois réglés, et/ou présentent chaque fois un astigmatisme et sont disposés en étant tournés l'un par rapport à l'autre en fonction de la caractéristique de rayonnement des émetteurs.

16. Dispositif selon l'une des revendications 7 à 15, **caractérisé en ce qu'**au moins deux canaux d'émission-réception fonctionnent avec des procédés électroniques de codage ou de mise en forme de signal différents et/ou fonctionnent avec des procédés de reconnaissance de code différents.
